# EUROPEAN PATENT APPLICATION

(11) **EP 4 631 763 A1**
(43) Date of publication of application: **15.10.2025**
(21) Application number: 24169814.1
(22) Date of filing: 11.04.2024
(51) Int. Cl.: B60K 35/21, B60K 35/28, B60W 40/09, B60W 50/14

(54) **SYSTEM AND METHOD OF CONTROLLING POWER OF AN ELECTRIC VEHICLE**

(71) Applicant: Ford Global Technologies, LLC, Dearborn, MI 48126 (US)
(72) Inventor: THOMAS, Ben, Enfield, EN1 3DA (GB); ROWLAND, Mike, Witham, CM8 3LY (GB); CRISP, Nicholas, Dashwood, Benfleet, SS7 2RJ (GB)
(74) Representative: Haley Guiliano International LLP

(57) **Abstract**

The present disclosure relates to a system and a method of controlling power of an electric vehicle. The system includes an interface, a sensing module, and a processing unit. The processing unit is communicatively coupled to the sensing module and the interface. The processing unit is configured to receive a value of at least one preset variable from the sensing module to estimate required power usage of the electric vehicle and output at least one efficiency indication through the interface for enhancing the efficiency and the range of the electric vehicle.

## Description

### Background

The present disclosure relates to a system and a method for estimating and controlling required power usage of an electric vehicle. Particularly, but not exclusively, the present disclosure relates to a system and a method of controlling the power of an electric vehicle.

### Summary

The demand for electric vehicles is increasing every day, due to their performance attributes and reduced emissions. However, sometimes it is difficult to achieve optimum operational efficiency of an electric vehcile due to driving style and/or ambient and external environmental conditions. A need, therefore, exists to provide a system and a method to overcome the above-mentioned problem.

An object of the present disclosure is to provide a system and a method for estimating and/or controlling the power of an electric vehicle.

Another object of the present disclosure is to provide a system and a method for enabling efficient power usage of an electric vehicle.

Another object of the present disclosure is to provide a system and a method for enhancing, e.g., maximizing, the range of an electric vehicle.

Another object of the present disclosure is to provide a system and a method for indicating required power usage, e.g., to a driver, of an electric vehicle.

Another object of the present disclosure is to provide a system and a method for enabling assessment of whether the current power usage exceeds the required power usage of an electric vehicle.

Another object of the present disclosure is to provide a system and a method for enhancing the driver's experience.

According to one aspect of the present disclosure, there is provided a power control system of an electric vehicle. The system includes an interface, a sensing circuitry e.g., of a sensing module, and a processing unit. The sensing module may include one or more of a sensor to detect at least one variable containing information about environmental and/or vehicle operational parameters. The processing unit may be configured to operate locally within the vehicle or is configured to operate remotely e.g., the processing unit is cloud based. The processing unit is communicatively coupled to the sensing module and the interface. The processing unit is configured to receive the value of at least one variable from the sensing module to estimate a required power usage (e.g., a minimum power usage required to meet the current or anticipated demands) of the electric vehicle and output at least one efficiency indication through the interface. In some examples, the variable may be a preset variable, an updated (or updateable) variable or a variable that is determined dynamically. The preset variable includes information related to the environmental and vehicle operational parameters, e.g., road conditions, weather conditions, vehicle conditions, vehicle aerodynamics, or a combination thereof. The preset variable may be a current value related to the environmental and vehicle operational parameters, or a predicted future value related to the environmental and vehicle operational parameters, e.g., based on a determined future route or usage of the vehicle. In some examples, the environmental and vehicle operational parameters may be updated dynamically. For example, information may be received from one or more road signs, sensor modules (e.g., sat nav), cloud databases, or other vehicles, e.g., in real time or near-real time, to indicate at least an environmental parameter. In some examples, the road conditions are updated e.g., dynamically, during the operation of the vehicle. For example, as the road construction or road material changes simultaneously along with the dynamic change in weather conditions.

In some examples, the processing unit determines an efficiency indication based on a comparison of the required power usage and a current power usage.

In some examples, the processing unit is communicatively coupled to a vehicle controller to receive a value of the current power usage.

In some examples, the sensing module includes at least one of an environmental parameter sensor, or a vehicle operational parameter sensor to determine the value of at least one preset variable.

In some examples, the at least one preset variable includes current road speed limit, road grade, current vehicle speed, vehicle mass, vehicle aerodynamics, current power usage, or a combination thereof.

In some examples, the efficiency indication includes range change indication, speed recommendation, road-load indication, driving mode indication, an efficiency performance summary, or a combination thereof. In some examples, the efficiency performance summary may be determined based on historic driving data of the vehicle, e.g., efficiency (and/or other operational parameter) over a period of operation of the vehicle.

According to one aspect of the present disclosure, there is provided a method of controlling power of an electric vehicle. The method comprises the steps of determining current power usage of the electric vehicle, estimating required power usage of the electric vehicle, comparing the current power usage and the required power usage, and outputting at least one efficiency indication based on the comparison. The step of estimating the required power usage comprises estimating a power usage using a value of at least one preset variable.

### Brief Description of the Drawings

The above and other objects and advantages of the disclosure will be apparent upon consideration of the following detailed description, taken in conjunction with the accompanying drawings, in which like reference characters refer to like parts throughout, and in which:
FIG. 1a illustrates a power control system of an electric vehicle, in accordance with some examples of the present disclosure;
FIG. 1b illustrates a power control system of an electric vehicle, in accordance with some examples of the present disclosure;
FIG. 2 illustrates a power control system of an electric vehicle, in accordance with some examples of the present disclosure;
FIG. 3a illustrates an interface for displaying an effect on the range for increased power usage of an electric vehicle, in accordance with some examples of the present disclosure;
FIG. 3b illustrates an interface for displaying the effect on the range for decreased power usage of an electric vehicle, in accordance with some examples of the present disclosure;
FIG. 4a illustrates an interface for displaying an indication for increased power usage of an electric vehicle, in accordance with some examples of the present disclosure;
FIG. 4b illustrates an interface for displaying an indication for decreased power usage of an electric vehicle, in accordance with some examples of the present disclosure; and
FIG. 5 illustrates a flowchart of a method of controlling power of an electric vehicle, in accordance with some examples of the present disclosure.

### Detailed Description

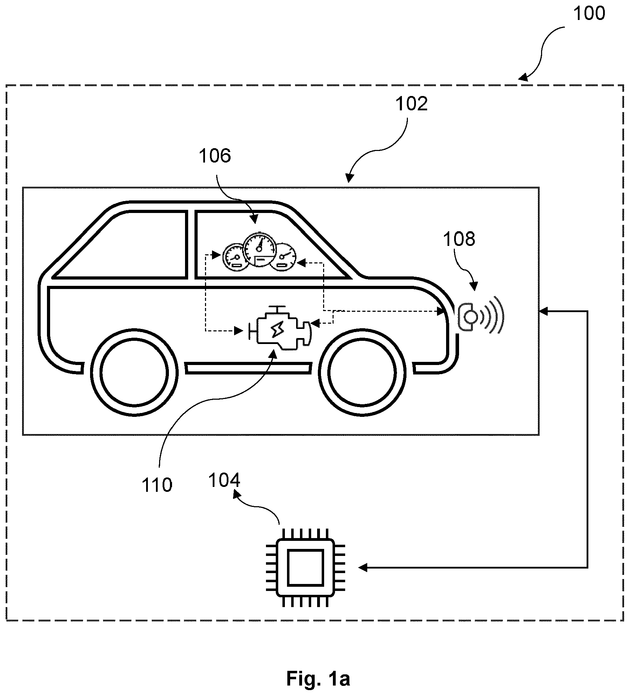

FIG. 1a illustrates a configuration of power control system 100 of an electric vehicle 102. The system 100 includes an electric vehicle 102, and a processing circuitry, e.g., a processing unit 104.

In some examples, the electric vehicle uses one or more electric motors for propulsion and powered using electricity from extravehicular sources, battery, or fuel cells. The electric vehicle is at least one of a Battery Electric Vehicle (BEV), Hybrid Electric Vehicle (HEV), Plug-in Hybrid Electric Vehicle (PHEV), or a Fuel Cell Electric Vehicle (FCEV). The BEVs are fully powered by electricity, whereas the HEVs use both an internal combustion engine (ICE) and a battery-powered motor. In HEVs, the ICE is used both to drive and charge when the battery is empty. The PHEVs use both an ICE and a battery charged from an external socket e.g., the vehicle's battery can be charged with electricity rather than the engine. The FCEVs consume electric energy directly converted from chemical energy that is produced using fuel cells.

The electric vehicle 102 further includes an interface 106, a sensing circuitry e.g., of a sensing module 108, and a vehicle controller 110.

The processing unit 104 is communicatively coupled to the electric vehicle 102 and is configured to operate remotely. The processing unit 104 can be any commercially available processor or a cloud system. The processing unit 104 can also be implemented as a digital signal processor (DSP), a controller, a microcontroller, a designated system on chip (SoC), an integrated circuit implemented with a field programmable gate array (FPGA), an application specific integrated circuit (ASIC), or a combination thereof. The processing unit 104 is configured remotely to, for example, reduce the burden of operations on the electric vehicle, enable distributed computing, provide better accessibility, enhance scalability, collaborate efficiently, or upgrade productivity, thereby maintaining efficient performance. However, in some examples, the processing unit 104 may be provided on the electric vehicle 102.

In some examples, the processing unit 104 is configured for distributed computing enabling multiple devices to perform the calculations for the inputs received from the sensing module 108, or the vehicle controller 110.

In some examples, the electric vehicle 102 operates in a connected car configuration, thereby enabling bidirectional interaction between the electric vehicle 102 and the processing unit 104.

The interface 106 includes a display device, an audio device, haptic feedback device, or other interfaces enabling driver and vehicle interaction. The display device may further include an odometer, vehicle instrument cluster, vehicle infotainment system, and/or spatial display device.

The sensing module 108 includes at least one of an environmental parameter sensor, a vehicle operational parameter sensor, or a combination thereof, to determine the value of at least one preset variable.

The environmental parameter sensor includes but is not limited to a camera, global positioning system (GPS), navigation system, airflow sensors, radio detecting and ranging sensor (RADAR), or a combination thereof. The vehicle operational parameter sensor includes but is not limited to a battery parameter sensor, temperature sensor, voltage sensor, current sensor, steering sensor, tyre pressure monitoring sensor, pedal sensor, or a combination thereof. In some examples, the functionality of the vehicle operation parameter sensor can be realised through the vehicle controller 110.

The at least one preset variable includes an environmental parameter, a vehicle operational parameter, or a combination thereof. In some examples, the preset variable may be an updated (or updateable) variable or a variable that is determined dynamically.

The environmental parameter includes but is not limited to current road speed limit, road grade, road material, road construction, curves, crossings, highway exits, junctions, traffic attributes, traffic lights, a weather condition, or a combination thereof. In some examples, the processing circuitry may access a database of environmental parameters, e.g., that is maintained by a highways agency. In some examples, the database of environmental parameters may be updated, e.g., dynamically, to reflect a current environmental parameter. For example, data may be received from one or more other vehicles, e.g., in real time or near-real time, to indicate a current environmental parameter of a road at the location of the one or more other vehicles.

The vehicle operational parameter includes but is not limited to current vehicle speed, vehicle mass, vehicle aerodynamics, current power usage, battery SOC, battery temperature, tyre pressure, steering angle, pedal pressure, or a combination thereof.

The vehicle aerodynamics includes resistive force or aerodynamic drag force value. The drag force is affected by the shape, structure, and size of the vehicle body and parts of the vehicle mounted over the exterior surface that include but are not limited to upfitter modifications, light bars, roof racks, mud flaps, rear spoiler, side mirrors, radio antenna, windshield wipers, ducts, or a combination thereof. In some examples, the aerodynamic drag force is determined using a road force estimator. The road force estimator calculates the force at the wheel required to maintain the vehicle speed, based on vehicle mass and road grade. In some examples, one or more vehicle operational parameters may be stored in a database. The database may be accessed by the processing circuitry to determine the vehicle aerodynamics. For example, a fleet operator may update a database of vehicle operational parameters based on a current configuration of a vehicle. For example, a fleet operator may update the database to include the current mass of a vehicle, either determined via load sensors or estimated, and/or whether a vehicle is currently fitted with one or more accessories, e.g., upfitter modifications, light bars, roof racks, etc. In some examples, the vehicle operational parameters may be updated, e.g., dynamically, during operation of a vehicle, e.g., as the load carried by a vehicle changes as cargo and/or passengers are loaded/unloaded.

The at least one preset variable is stored using at least one memory module. The memory module may include any of the volatile memory elements (for example, random access memory, such as DRAM, SRAM, SDRAM, etc.), non-volatile memory elements (for example, ROM, hard drive, etc.), other storage media or combinations thereof. The memory module may have a distributed architecture, where various components are situated remotely from one another. The software in the memory module can include one or more software programs, and machine learning algorithms, each of which includes an ordered listing of executable instructions for implementing logical functions. During operation, the sensing module 108 determines the value of at least one preset variable, e.g., environmental, or vehicle operational parameter. The sensing module 108 may store the value of at least one preset variable inside one or more memory modules (not shown here).

Based on the value of the at least one preset variable, the processing unit 104 estimates the required power usage (e.g., a power usage required to meet, within a threshold, an instantaneous or predicted near-time power usage) of the electric vehicle 102 based on environmental and vehicle conditions.

The processing unit 104 compares the required power usage with the current power usage of the electric vehicle, and outputs at least one efficiency indication through the interface 106. For example, the at least one efficiency indication may be an indication that the electric vehicle is operating at a current power that is a certain percentage, e.g., 5% or 10%, above the required power usage. Such an indication may not be evident based on analysis or inspection of the speed of the electric vehicle, since vehicle speed and power usage are not proportional. For example, traveling at 2 miles per hour (mph) above a speed limit, e.g., 72 mph in an area with a speed limit of 70 mph (approximately 2.8% over the speed limit), may result in the current power usage of the electric vehicle being 15% above the required power usage. As such, a small perceived speed differential may unduly infer a small power usage differential.

In some examples, the efficiency indication includes but is not limited to range impact indication, speed recommendation, road-load indication, driving mode indication, or a combination thereof.

In some examples, the range change indication is provided when the current power usage exceeds the required power usage, to enhance overall efficiency of the electric vehicle. In some examples, the range change indication is provided when the current power usage is less than the required power usage, enabling enhanced overall efficiency indication of the performance of the electric vehicle.

The speed recommendation, as an example of efficiency indication, provides recommendations to the driver regarding the increased or decreased speed with respect to the required power usage. The recommendation includes advice to alter the current vehicle speed to maintain or enhance the efficiency and range of the electric vehicle, e.g., by adjusting the current power usage to be within a threshold of the required power usage. In some examples, a driving mode may be caused to be engaged, e.g., using processing circuitry, to maintain the current vehicle speed within a predetermined threshold, e.g., based on a desired operation of the vehicle. In some examples, processing circuitry causes the vehicle speed to increase or decrease, e.g., automatically, based on the speed recommendation. For example, the processing circuitry may cause the vehicle speed to be adjusted or maintained to control the efficiency and range of the electric vehicle, e.g., by adjusting the current power usage to be within a threshold of the required power usage.

The road-load indication, as an example of efficiency indication, demonstrates a road-load indication arrow, displayed in a first pattern when the current power usage is less than the required power usage, and displayed in a second pattern when the current power usage exceeds the required power usage.

The driving mode indication, as an example of efficiency indication, provides advice, instruction and/or signal to modify (or cause to modify) the driving mode to conserve energy. For example, in case the current power usage exceeds the required power usage, and it is determined that the vehicle is being driven in sports driving mode, a driving mode indication can be provided to enable the driver to switch to an economy driving mode to maintain efficiency. The driving mode indication advises the driver of upcoming road features such as junctions, and curves. The indication may be displayed in the form of icons, to advise the driver to lift off from the throttle control. The driving mode indication in the form of icons may be combined with speed recommendation to advise a reduction in power as any specific road feature is approached, to provide context for the advice. In some examples, a driving mode may be caused to be engaged, e.g., by processing circuitry, based on the driving mode indication. For example, when the driving mode indication provides advice to modify the driving mode to conserve energy, processing circuitry may cause an efficient driving mode to be engaged. In some examples, this may occur when it is determined that a driver has ignored the indication.

In some examples, the efficiency indication is used for gamification purposes. Scores are collected and shared based on maintenance of the current power usage under a peak efficiency. Based on the collected and shared scores, the most efficient drivers are rewarded, to encourage efficient driving.

In some examples, where processing circuitry causes one or more operational parameters of the vehicle, e.g., speed, to be controlled based on the efficiency indication, such control may be overridden, e.g., by an action of a driver and/or a fleet operator. For example, where processing circuitry causes a speed of the vehicle to be controlled, e.g., to with a certain threshold to maintain efficiency or range, such control may be overridden by operation of a vehicle throttle, e.g., by depressing a throttle control pedal beyond a certain limit.

The processing unit 104 is communicatively coupled to the sensing module 108, the interface 106, and the vehicle controller 110 using at least one of a wired or a wireless communication protocol.

The at least one wired communication protocol may include but is not limited to an ethernet (IEEE 802.3), a power line communication (PLC), a controller area network (CAN), a media-oriented system transport (MOST), or a flex Ray. The at least one wireless communication protocol may include but is not limited to radio frequency (RF), infrared (IrDA), Bluetooth, Zigbee (and other variants of the IEEE 802.15 protocol), a wireless fidelity (Wi-Fi) or IEEE 802.11 (any variation), IEEE 802.16 (WiMAX or any other variation), direct sequence spread spectrum (DSSS), frequency hopping spread spectrum (FHSS), global system for mobile communication (GSM), general packet radio service (GPRS), enhanced data rates for GSM Evolution (EDGE), long term evolution (LTE), cellular protocols (2G, 2.5G, 2.75G, 3G, 4G or 5G), near field communication (NFC), satellite data communication protocols, or any other protocols for wireless communication.

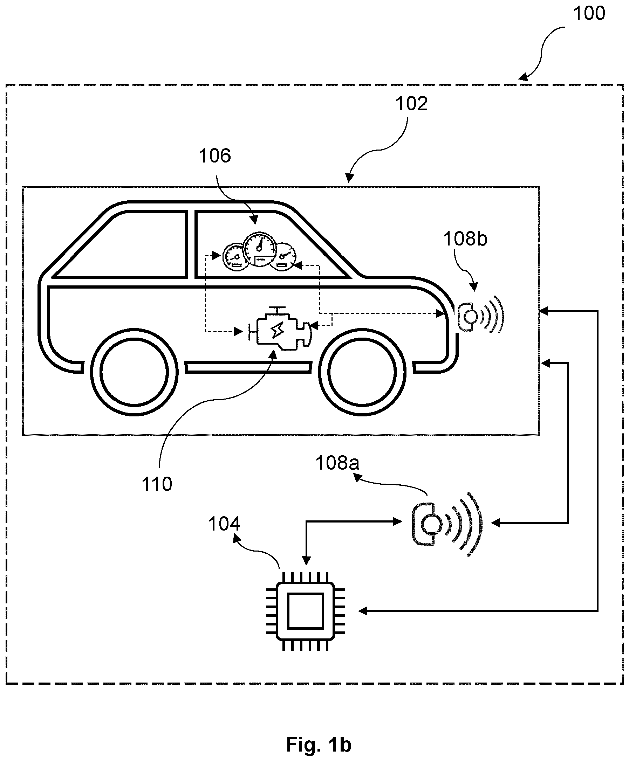

FIG. 1b illustrates another configuration of power control system 100 of an electric vehicle 102. The system 100 includes an electric vehicle 102, a processing unit 104, and an external sensing module 108a. The electric vehicle 102 further includes an interface 106, an internal sensing module 108b, and a vehicle controller 110. The external sensing module 108a is communicatively coupled to the electric vehicle 102.

The processing unit 104 is communicatively coupled to the electric vehicle 102 and the external sensing module 108a. The processing unit 104 is configured for remote operation. For example, the processing unit 104 is configured over a cloud network to enable distributed computing, efficient accessibility, and performance.

The internal sensing module 108b and the external sensing module 108a are configured to determine environmental and vehicle operational parameters that include but are not limited to current road speed limit, road grade, road material, road construction, curves, crossings, highway exits, junctions, traffic attributes, traffic lights, current vehicle speed, vehicle mass, vehicle aerodynamics, current power usage, battery SOC, battery temperature, tyre pressure, steering angle, pedal pressure, or a combination thereof.

In some examples, the external sensing module 108a is configured to determine parameters including weather conditions, route conditions, or availability of next charging stations. The external sensing module 108a complements the processing unit 104, and the internal sensing module 108b, and enables vehicle-to-everything (V2X), vehicle-to-vehicle (V2V), vehicle-to-infrastructure (V2I), vehicle-to- pedestrian (V2P) communication capabilities, or a combination thereof.

The V2X, V2V, V2I, V2P, or a combination thereof enables real-time data exchange with nearby vehicles, bicycles, pedestrians, traffic lights, lane markers, parking meters, or a combination thereof to determine the upcoming environmental and road conditions, and accordingly alter the speed and power usage of the electric vehicle.

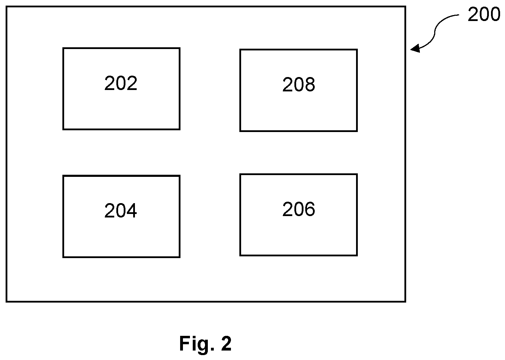

FIG. 2 illustrates a power control system 200 of an electric vehicle. The system 200 includes an interface 202, a sensing circuitry e.g., of a sensing module 204, a processing unit 206, and a vehicle controller 208.

In some examples, the interface 202 is implemented in the electric vehicle, e.g., at least one of interface 202, sensing module 204, processing unit 206, and vehicle controller 208 may be a part of the electric vehicle. In some examples, interface 202 and/or processing unit 206 is configured for remote operation, e.g., at a location not associated with the electric vehicle, such as a control centre for the electric vehicle (or a fleet of electric vehicles).

The interface 202 includes a display device, an audio device, haptic feedback device, or other interfaces enabling driver and vehicle interaction. The display device may further include an odometer, vehicle instrument cluster, vehicle infotainment system, or spatial display device.

The interface 202 may include a web-based application, application program interface (API), software application, or a combination thereof. The interface 202 may further include a plurality of sub-interfaces communicatively coupled to each other.

The sensing module 204 includes at least one of an environmental parameter sensor, a vehicle operational parameter sensor, or a combination thereof, to determine the value of at least one preset variable. In some examples, the preset variable may be an updated (or updateable) variable or a variable that is determined dynamically.

The processing unit 206 is communicatively coupled to the sensing module 204, the interface 202, and the vehicle controller 208. The processing unit 206 is configured to process the values received from the sensing module 204, the vehicle controller 208, or a combination thereof to implement functional aspects of the present disclosure. In some examples, the functionality of the processing unit 206 can be realized through the processing capability of the vehicle controller 208.

In some examples, the processing unit 206 is configured within the interface 202 and receives inputs from the sensing module 204, the vehicle controller 208, or a combination thereof.

The processing unit 206 compares the required power usage with the current power usage of the electric vehicle, and outputs at least one efficiency indication through the interface 202.

In some examples, the processing unit 206 may output the efficiency indication in the form of an alert to an external interface (not shown) connected wired or wirelessly to the electric vehicle. The alert may include but is not limited to a pop up, notification, flashing light, audio signal, or a combination thereof.

The vehicle controller 208 is communicatively coupled to the sensing module 204 and provides at least one of the vehicle operational parameters to the sensing module 204. In some examples, the vehicle controller 208 is the same entity as that of the processing unit 206.

In some examples, a temperature gauge (not shown here) is provided over the interface 202 to provide information about the thermal derate state of the electric vehicle, e.g., a battery of the electric vehicle. The temperature of the electric vehicle is monitored, and as the temperature increases, the power usage of the electric vehicle increases. The temperature gauge displays the monitored temperature of the electric vehicle and simultaneously displays the time left for the vehicle to derate, e.g., to remain within a predefined power range or below a predefined power value. The time left to derate decreases with the increase in temperature. Based on the temperature and time left to derate, an indication is provided for enhancing the performance of the electric vehicle and allows the driver to change driving behaviour and alter current power usage, e.g., to mitigate a derate.

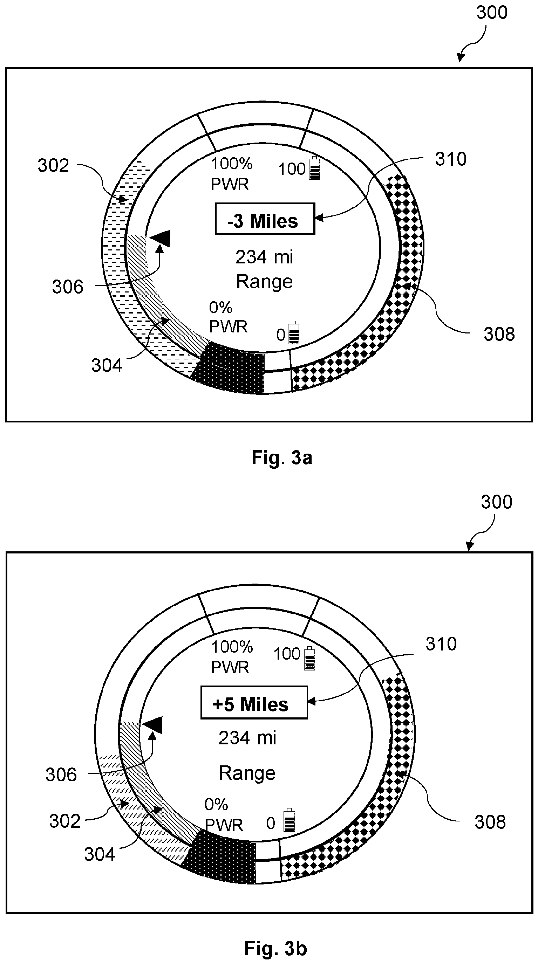

FIG. 3a illustrates an interface 300. The interface 300 displays current power usage indicator 302, required power usage indicator 304, a road load indication arrow 306, a battery status indicator 308, and a range change indication 310.

During vehicle operation, the current power usage indicator 302 and the required power usage indicator 304 are displayed along the road load indication arrow 306.

The battery status indicator 308 is displayed to provide information regarding the battery status of the electric vehicle.

The range change indication 310 provides information to the driver about the effect on the range of the vehicle with respect to the power usage of the electric vehicle.

The range of the electric vehicle is derived based on factors that include but is not limited to vehicle mass, battery size, electric motor specification, driving style, road conditions and road grade, environmental conditions, road speed limit for a particular portion of a road, or a combination thereof.

As the current power usage indicator 302 exceeds the required power usage indicator 304, the efficiency indication changes adaptively and is displayed over the interface 300.

The road load indication arrow 306, as an example of efficiency indication, is adaptive to suggest the required power usage and is set according to the environmental and vehicle operational parameters.

The range change indication 310, as an example of efficiency indication, represents the lost or gained opportunity on the range of the electric vehicle. The range change indication 310 is displayed as negative in FIG. 3a, as the current power usage indicator 302 exceeds the required power usage indicator 304. The range change indication 310 is displayed as a distance, miles, or kilometers (km). In some examples, the range change indication 310 can be displayed as a percentage change in range.

To represent a reduction in the potential range of the electric vehicle, say, the electric vehicle is operating at a current power usage of e.g., 15 kWh, while the required power usage is e.g., 10 kWh. The electric vehicle provides an overall range of e.g., 5 miles at the required power usage, and while operating at current power usage, the overall range is reduced to e.g., 2 miles. Thus, the range change indication 310 is displayed as "-3 miles" to signify the lost opportunity on the range of the electric vehicle.

The effect on the range can be shown live to the driver during the vehicle operation or displayed in an overall trip summary. The overall trip summary includes a post-drive report disclosing power usage history, e.g., where the power/energy has been spent (propulsion, climate, or auxiliary loads). The post-drive report may additionally include an appreciation remark, e.g., `You saved 5 km by driving carefully".

The efficiency indication can also be displayed using various display patterns for the current power usage indicator 302, the required power usage indicator 304, or a combination thereof. For example, in FIG. 3a, a first pattern is displayed for the power usage indicator 302, when the current power usage is more than the required power usage, and, in FIG. 3b, a second pattern is displayed for the power usage indicator when the required power usage exceeds the current power usage.

In some examples, the first and second pattern are displayed as colours. The first pattern is displayed as green colour and the second pattern is displayed as red colour.

FIG. 3b illustrates an interface 300. The interface 300 displays current power usage indicator 302, required power usage indicator 304, a road load indication arrow 306, a battery status indicator 308, and an effect on range indication 310.

The effect on range indication 310 is displayed as positive in FIG.3b, as the current power usage indicator 302 is less than the required power usage indicator 304. The effect on range indication 310 is displayed as a distance, miles, or kilometers (km) that signifies an increased potential range of the electric vehicle. In some examples, the range effect indication 310 can be displayed as a percentage change in range.

For example, if the electric vehicle is operating at a 33.3% less current power usage compared to the required power usage. In such case, the electric vehicle provides an increased overall range of 25%,and the range effect indication 310 is displayed as "+25%" to signify the gained opportunity on the range of the electric vehicle.

In some examples, the first and second pattern are displayed as colours. The first pattern is displayed as green colour and the second pattern is displayed as red colour. Such displaying of feedback or indications using a pattern, e.g., colour, enables the driver to conveniently identify and understand the indication while driving. The green colour signifies positive feedback for increasing the potential range of the electric vehicle, and the red colour signifies negative feedback for decreasing the potential range of the electric vehicle.

In some examples, the road load indication arrow 306 would disappear during deceleration. For example, when the electric vehicle is under deceleration, the range indication 310 will display an increase in the range resultant on the power recovery during deceleration. For example, during deceleration, if the electric vehicle is operating at 6 kWh compared to the required power usage of 6.5 kWh, the range of the electric vehicle increases by 0.5 miles, for example. To represent the increased range of the electric vehicle, the range change indication 310 displays "+0.5 Miles". In some example, at heavy decelerations, the power usage indicator 302 turns into a second pattern, as many heavy decelerations affect the efficiency of the electric vehicle. Hence, enabling the driver to enhance control of deceleration for better efficiency and range of the vehicle.

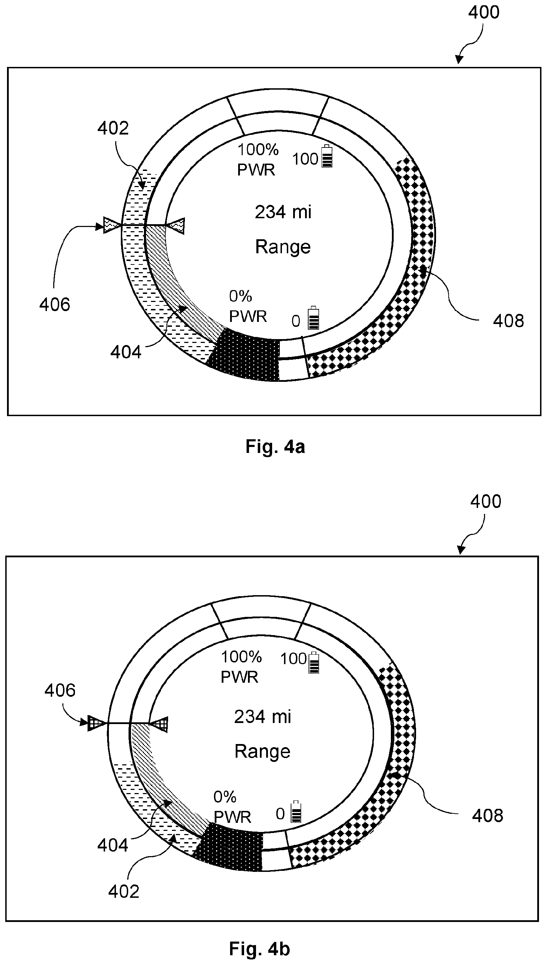

FIG. 4a and FIG. 4b illustrates an interface 400. The interface 400 displays current power usage indicator 402, required power usage indicator 404, a road load indication arrow 406, and a battery status indicator 408.

The road load indication arrow 406 is displayed in a first pattern when the required power usage indicator 404 exceeds the current power usage indicator 404, and when the current power usage indicator 402 exceeds the required power usage indicator 404, the road load indication arrow 406 is displayed in a second pattern.

In FIG. 4a, the road load indication arrow 406 is displayed in the second pattern, and in FIG. 4b, the road load indication arrow 406 is displayed in the first pattern.

The road load indication arrow 406 may be shown as at least one of the possible colour, outline, pattern, or shape, or a combination thereof.

In some examples, the first and second pattern are displayed as colours. The first pattern is displayed as green colour and the second pattern is displayed as red colour.

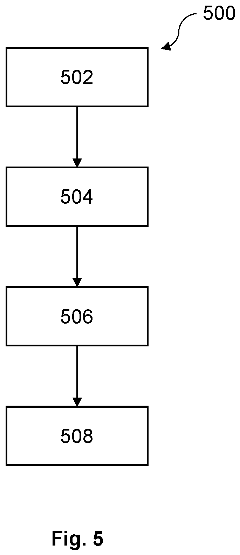

FIG. 5 illustrates a flowchart 500 for enabling efficient power usage of an electric vehicle which comprises steps of determining (502) current power usage of the electric vehicle, estimating (504) required power usage of the electric vehicle, comparing (506) the current power usage and the required power usage, and outputting (508) at least one efficiency indication based on the comparison. It should be noted that the process in FIG. 5, or any step thereof, could be performed on, or provided by, any of the devices shown in FIGS. 1a to 4b.

The step of determining (502) the current power usage of the electric vehicle further comprises receiving the value of the current power usage from a vehicle controller. In some examples, the step of determining (502) comprises receiving a value of at least one preset variable from at least one of the sensing modules, or a vehicle controller, and processing the input to determine the current power usage.

The step of estimating (504) the required power usage comprises estimating a power usage using the value of at least one preset variable. The at least one preset variable includes an environmental parameter, a vehicle operational parameter, or a combination thereof. In some examples, the preset variable may be an updated (or updateable) variable or a variable that is determined dynamically.

The step of outputting (504) the at least one efficiency indication further comprises, outputting the efficiency indication using an interface that include but is not limited to a display device, an audio device, a haptic feedback device, or other interfaces enabling driver and vehicle interaction. The display device may further include an odometer, vehicle instrument cluster, vehicle infotainment system, or spatial display device. Preferably, efficiency indication is provided using the interface configured in the electric vehicle, or the remote interface. The interface may include a web-based application, application program interface (API), software application, or a combination thereof. The interface may further include a plurality of sub-interfaces communicatively coupled to each other.

In some examples, the efficiency indication is provided in the form of an alert to an external interface wired or wirelessly coupled to the electric vehicle. The alert may include but is not limited to a pop up, notification, flashing light, audio signal, or a combination thereof.

The step of outputting (504) the at least one efficiency indication includes outputting a range impact indication, speed recommendation, road-load indication, driving mode indication, or a combination thereof.

In some examples, the range change indication is provided when the current power usage exceeds the required power usage, to enhance overall efficiency of the electric vehicle. In some examples, the range change indication is provided when the current power usage is less than the required power usage, enabling enhanced overall efficiency of the electric vehicle.

The speed recommendation, as an example of efficiency indication, provides recommendations to the driver regarding the increased or decreased speed with respect to the required power usage. The recommendation includes advice to alter the current vehicle speed to maintain or enhance the efficiency and range of the electric vehicle. For example, the advice is demonstrated using a pop-up, notification, flashing light, audio signal, or a combination thereof. In some examples, the pop-up or notification may additionally include, say "Lower down the speed by 5 km/h to achieve better efficiency" as a recommendation advice. In some examples, the flashing light is depicted in different patterns for increased and decreased speed. In some examples, the audio signal is output as distinct audio patterns for increased and decreased speed.

The road-load indication, as an example of efficiency indication, demonstrates a road-load indication arrow, displayed in a first pattern when the current power usage is less than the required power usage, and displayed in a second pattern when the current power usage exceeds the required power usage.

The driving mode indication, as an example of efficiency indication, provides advice to modify the driving mode to conserve energy. For example, in case the current power usage exceeds the required power usage, and it is determined that the vehicle is being driven in sports driving mode, a driving mode indication can be provided to enable the driver to switch to an economy driving mode to maintain efficiency.

The system and the method of the present disclosure is discussed with respect to the field of electric vehicles that include but are not limited to an electric bicycle, an electric car, or an electric bus throughout the description. However, the system and the method of the present disclosure may also be applied to electric locomotives, or electric aviation.

The above-stated descriptions are merely example implementations of this application but are not intended to limit the protection scope of this application. A person with ordinary skills in the art may recognize substantially equivalent structures or substantially equivalent acts to achieve the same results in the same manner or a dissimilar manner; the exemplary embodiment should not be interpreted as limiting the disclosure to one embodiment.

While aspects of the present disclosure have been described in detail with reference to the illustrated embodiments, those skilled in the art will recognize that many modifications may be made thereto without departing from the scope of the present disclosure. The present disclosure is not limited to the precise construction and compositions disclosed herein; any and all modifications, changes, and variations apparent from the foregoing descriptions are within the spirit and scope of the disclosure as defined in the appended claims. Moreover, the present concepts expressly include any and all combinations and sub combinations of the preceding elements and features.

The description is provided for clarification purposes and is not limiting. Words and phrases are to be accorded their ordinary, plain meaning unless indicated otherwise.

## Claims

1. A power control system (100, 200) of an electric vehicle (102), including:
an interface (106, 202, 300, 400);
a sensing module (108, 204); and
a processing unit (104, 206) communicatively coupled to the sensing module (108, 204) and the interface (106, 202, 300, 400);
wherein the processing unit (104, 206) is configured to receive a value of at least one preset variable from the sensing module (108, 204) to estimate a required power usage of the electric vehicle (102) and output at least one efficiency indication through the interface (106, 202, 300, 400).

2. The system of claim 1, wherein the processing unit (104, 206) is configured to determine an efficiency indication based on a comparison of the required power usage and current power usage.

3. The system of claim 2, wherein the processing unit (104, 206) is communicatively coupled to a vehicle controller (110, 208) to receive a value of current power usage.

4. The system of claim 1, wherein the sensing module (108, 204) includes at least one of an environmental parameter sensor, or a vehicle operational parameter sensor to determine the value of the at least one preset variable.

5. The system of claim 1, wherein the at least one preset variable includes current road speed limit, road grade, current vehicle speed, vehicle mass, vehicle aerodynamics, current power usage, or a combination thereof.

6. The system of claim 1, wherein the efficiency indication includes range impact indication, speed recommendation, road-load indication, driving mode indication, an efficiency performance summary, or a combination thereof.

7. The system of claim 6, wherein the efficiency indication includes a signal that causes a driving mode of the electric vehicle to be modified.

8. A method (500) of controlling power of an electric vehicle (102), the method comprising:
determining (502) current power usage of the electric vehicle (102);
estimating (504) required power usage of the electric vehicle (102);
comparing (506) the current power usage and the required power usage; and
outputting (508) at least one efficiency indication based on the comparison; wherein estimating (504) the required power usage comprises estimating (504) power usage using a value of at least one preset variable.

9. The method of claim 8, wherein the at least one preset variable includes an environmental parameter, a vehicle operational parameter, or a combination thereof.

10. The method of claim 9, wherein the environmental parameter includes road speed limit, road grade, or a combination thereof.

11. The method of claim 9, wherein the vehicle operational parameter includes current vehicle speed, vehicle mass, vehicle aerodynamics, current power usage, or a combination thereof.

12. The method of claim 8, wherein outputting (508) the at least one efficiency indication includes outputting (508) at least one range impact indication, speed recommendation, road-load indication, driving mode indication, an efficiency performance summary, or a combination thereof.

13. The method of claim 12, wherein the efficiency indication includes a signal that causes a driving mode of the electric vehicle to be modified.

14. An electric vehicle comprising the system of claim 1.
